# EUROPÄISCHE PATENTSCHRIFT

(11) **EP 2 278 133 B1**
(45) Veröffentlichungstag und Bekanntmachung des Hinweises auf die Patenterteilung: **31.12.2014**
(21) Anmeldenummer: 10167377.0
(22) Anmeldetag: 25.06.2010
(51) Int. Cl.: F01N 3/20, F01N 3/28, B01F 3/04, B01F 5/04, B01F 5/06, B21D 53/00

(54) **Misch- und/oder Verdampfungseinrichtung**
Mixing and/or vaporisation device
Dispositif de mélange et/ou d'évaporation

(30) Priorität: 25.07.2009 DE 102009034670
(43) Veröffentlichungstag der Anmeldung: 26.01.2011
(73) Patentinhaber: Eberspächer Exhaust Technology GmbH & Co. KG, 66539 Neunkirchen (DE)
(72) Erfinder: Wirth, Georg, 73230, Kirchheim/Teck (DE)
(74) Vertreter: BRP Renaud & Partner mbB Rechtsanwälte Patentanwälte Steuerberater

(56) Entgegenhaltungen:
- EP-A1- 1 982 756
- WO-A1-97/35107
- WO-A1-2009/157995
- DE-A1- 3 536 315
- FR-A1- 2 921 415
- US-A- 4 041 113
- US-B1- 7 028 663

## Beschreibung

Die vorliegende Erfindung betrifft eine Misch- und/oder Verdampfungseinrichtung für eine Abgasanlage, insbesondere eines Kraftfahrzeugs, mit den Merkmalen des Oberbegriffs des Anspruchs 1. Die Erfindung betrifft außerdem eine mit einer solchen Misch- und/oder Verdampfungseinrichtung ausgestattete Abgasanlage.

Bei Abgasanlagen von Brennkraftmaschinen kann es aus unterschiedlichen Gründen erforderlich sein, ein flüssiges Edukt in den Abgasstrom einzubringen. Beispielsweise kann Kraftstoff stromauf eines Oxidationskatalysators in den Abgasstrom eingespritzt werden, um an dem stromab nachfolgenden Oxidationskatalysator eine exotherme Verbrennungsreaktion auszulösen. Ebenso kann beispielsweise ein Reduktionsmittel, wie zum Beispiel Ammoniak, in den Abgasstrom eingespritzt werden, um in einem nachfolgend angeordneten SCR-Katalysator im Abgas mitgeführte Stickoxide zu reduzieren. Anstelle von Ammoniak kann auch Harnstoff bzw. eine wässrige Harnstofflösung in den Abgasstrom eingespritzt werden. Durch eine Hydrolyse-Reaktion entstehen aus der Harnstoff-Wasser-Lösung dann Ammoniak und Wasser. Ferner kann ein Kraftstoff oder ein anderes geeignetes Reduktionsmittel stromauf eines NOX-Speicherkatalysators in die Abgasströmung eingespritzt werden, um den NOX-Speicherkatalysator zu regenerieren.

Um die Wirkungsweise des in flüssiger Form in den Abgasstrang eingespritzten Edukts zu verbessern bzw. zu ermöglichen, ist eine weitgehende Verdampfung ebenso erstrebenswert wie eine intensive Durchmischung mit dem Abgas, um so ein möglichst homogenes Abgas-Edukt-Gemisch zu erhalten. Hierzu kann die Abgasanlage mit einer im Abgasstrang stromab eine Einspritzeinrichtung angeordneten Misch- und/oder Verdampfungseinrichtung ausgestattet sein.

Aus der DE 10 2007 028 449 A1 ist eine herkömmliche Misch- und/oder Verdampfungseinrichtung bekannt, die mehrere in Umfangsrichtung verteilt angeordnete Schaufeln aufweist, die jeweils von einer Außenwand nach innen vorstehen. Jede Schaufel weist dabei zumindest in einem an die Außenwand anschließenden Bereich in der Axialrichtung ein Profil auf, bei dem eine Abströmkante in Umfangsrichtung gegenüber einer Anströmkante einen Versatz aufweist. Dementsprechend sind die Schaufeln gegenüber der Abgasströmung angestellt, wodurch sie die Abgasströmung mit einem Drall beaufschlagen können. Ferner ist es durch das Anstellen der Schaufeln möglich, die Schaufeln so zu formen und anzuordnen, dass sie sich in Umfangsrichtung gegenseitig überlappen, wodurch eine in axialer Richtung blickdichte Ringfläche erzeugt werden kann, die einen Tröpfchendurchschlag durch die Misch- und/oder Verdampfungseinrichtung effektiv behindert oder sogar verhindert.

Die mit Hilfe einer solchen bekannten Misch- und/oder Verdampfungseinrichtung in der Abgasströmung realisierbare Verwirbelung bzw. Drallerzeugung geht jedoch mit einem Druckanstieg einher, was sich negativ auf die Leistung und auf den Wirkungsgrad einer mit der Abgasanlage ausgestatteten Brennkraftmaschine auswirkt.

Gattungsgemäße Misch- und/oder Verdampfungseinrichtungen entsprechend dem Oberbegriff des Anspruchs 1 sind aus der EP 1 982 756 A1 und WO 2009/157995 A1 bekannt. Sie charkterisieren sich gegenüber einer herkömmlichen Misch- und/oder Verdampfungseinrichtung der vorstehend genannten Art dadurch, dass das Profil an der Anströmkante und an der Abströmkante jeweils einen Anstellwinkel zur Axialrichtung aufweist, der in einem Bereich von einschließlich -10° bis einschließlich +10° liegt.

Derartige Misch- und/oder Verdampfungseinrichtungen beruhen auf dem allgemeinen Gedanken, die Schaufeln so zu profilieren und gegenüber der Abgasströmung anzustellen, dass sich sowohl für die Anströmkante als auch für die Abströmkante jeweils ein Anstellwinkel zur Axialrichtung bzw. zur Abgasströmung einstellt, der betragsmäßig maximal 10° beträgt. Mit anderen Worten, der Anstellwinkel gegenüber der Abgasströmung ist anströmseitig und abströmseitig sehr klein. In der Folge kommt es anströmseitig und abströmseitig der Schaufeln nur zu einer sehr geringen Strömungsumlenkung bzw. Strömungsablenkung. Dies führt zu einem geringen Strömungswiderstand bei der Durchströmung der Misch- und/oder Verdampfungseinrichtung. Besonders vorteilhaft ist dabei, dass die Tendenz zur Aufprägung eines Dralls auf die die Misch- und/oder Verdampfungseinrichtung durchströmende Abgasströmung signifikant reduziert ist. Dies wirkt sich nachhaltig für den Gesamtströmungswiderstand der Abgasströmung stromab der Misch- und/oder Verdampfungseinrichtung aus, da die der Abgasströmung aufgeprägte Drallschleppe hinsichtlich Rotationsenergie und Länge reduziert ist.

Die vorliegende Erfindung beschäftigt sich mit dem Problem, für eine Misch- und/oder Verdampfungseinrichtung der eingangs genannten Art eine verbesserte Ausführungsform anzugeben, die sich insbesondere durch geringe Herstellungskosten auszeichnet.

Dieses Problem wird erfindungsgemäß durch die Gegenstände der unabhängigen Ansprüche gelöst. Vorteilhafte Ausführungsformen sind Gegenstand der abhängigen Ansprüche.

Erfindungsgemäß wird vorgeschlagen, dass die Außenwand mehrere in Umfangsrichtung verteilt angeordnete Einschlingungen aufweist, derart, dass ein Blechstreifen, aus dem die Außenwand durch Umformung hergestellt ist, im nicht umgeformten Zustand länger ist als ein Umfang der daraus hergestellten Außenwand. Somit lässt sich die Anzahl der Schaufeln auch dann vergrößern, wenn die Außenwand mit den Schaufeln integral aus einem einzigen Blechstück hergestellt werden soll.

Entsprechend einer vorteilhaften Ausführungsform kann das Profil der Schaufeln zwischen der Anströmkante und der Abströmkante einen Anstellwinkel gegenüber der Axialrichtung bzw. der Abgasströmung aufweisen, der größer ist als der an der Anströmkante und an der Abströmkante herrschende Anstellwinkel. Durch diese Maßnahme kann der in Umfangsrichtung vorgesehene Versatz zwischen Anströmkante und Abströmkante vergleichsweise groß ausgeführt werden, was zur Realisierung der gewünschten Überdeckung benachbarter Schaufeln in Umfangsrichtung vorteilhaft ist. Es hat sich gezeigt, dass auch bei einer derartigen Konfiguration die kleinen Anstellwinkel an der Anströmkante und an der Abströmkante günstig für einen vergleichsweise geringen Durchströmungswiderstand der Misch- und/oder Verdampfungseinrichtung sind.

Gemäß einer anderen vorteilhaften Ausführungsform kann der Anstellwinkel des Profils an der Anströmkante und an der Abströmkante entlang der jeweiligen Schaufel von außen nach innen konstant sein, während ein zwischen Anströmkante und Abströmkante herrschender Anstellwinkel entlang der jeweiligen Schaufel von außen nach innen abnimmt. Mit anderen Worten, die jeweilige Schaufel ist in der Radialrichtung verwunden, derart, dass der in Umfangsrichtung zwischen Anströmkante und Abströmkante vorliegende Versatz von radial außen nach radial innen abnimmt. Dabei ist diese Verwindung so realisiert, dass die Anströmkante und die Abströmkante weiterhin konstante Anstellwinkel besitzen und sich insbesondere geradlinig erstrecken.

Entsprechend einer anderen vorteilhaften Ausführungsform sind die Schaufeln in axialer Richtung relativ groß dimensioniert, wodurch auch bei einem vergleichsweise kleinen Anstellwinkel der Schaufel zwischen Anströmkante und Abströmkante eine hinreichende Blickdichtigkeit in Axialrichtung realisierbar ist. Insbesondere ist die axiale Länge einer Schaufel multipliziert mit der Anzahl der Schaufeln größer als die Umfangslänge der Außenwand, von welcher die Schaufeln nach innen abstehen.

Erfindungsgemäss ist die Misch- und/oder Verdampfungseinrichtung aus einem einzigen Blechteil durch Umformung hergestellt . Hierdurch lässt sich diese Einrichtung besonders preiswert herstellen. Um auch bei einer solchen Ausführungsform die Summe der axialen Längen aller Schaufeln größer auslegen zu können, als den Umfang der Außenwand, ist es entsprechend der Erfindung vorgesehen, die Außenwand mit mehreren, in Umfangsrichtung verteilt angeordneten Einschlingungen auszustatten. Durch diese Einschlingungen rücken die benachbarten Schaufeln näher zusammen, so dass in der Misch- und/oder Verdampfungseinrichtung eine größere Anzahl an Schaufeln untergebracht werden kann, wodurch insgesamt die Summe der axialen Schaufellängen vergrößert werden kann.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch
- Fig. 1: eine stark vereinfachte Prinzipdarstellung einer Abgasanlage,
- Fig. 2: eine Axialansicht einer Misch- und/oder Verdampfungseinrichtung auf deren Abströmseite,
- Fig. 3: eine Schnittdarstellung der Misch- und/oder Verdampfungseinrichtung entsprechend Schnittlinien III in Fig. 2,
- Fig. 4: eine Seitenansicht der Misch- und/oder Verdampfungseinrichtung,
- Fig. 5: eine perspektivische Ansicht der Misch- und/oder Verdampfungseinrichtung auf deren Abströmseite,
- Fig. 6: eine perspektivische Ansicht wie in Fig. 5, jedoch auf die Anströmseite der Misch- und/oder Verdampfungseinrichtung,
- Fig. 7: eine Draufsicht auf einen Blechkörper zur Herstellung der Mischund/oder Verdampfungseinrichtung,
- Fig. 8-10: axiale Detailansichten im Bereich von Einschlingungen einer Außenwand der Misch- und/oder Verdampfungseinrichtung,
- Fig. 11, 12: Ansichten wie in den Fig. 5 und 6, jedoch bei einer anderen Ausführungsform der Misch- und/oder Verdampfungseinrichtung.

Die vorstehenden und nachstehenden absoluten Zahlenangaben für Abmessungen und Winkel sind jeweils im Rahmen der üblichen Fertigungstoleranzen zu verstehen.

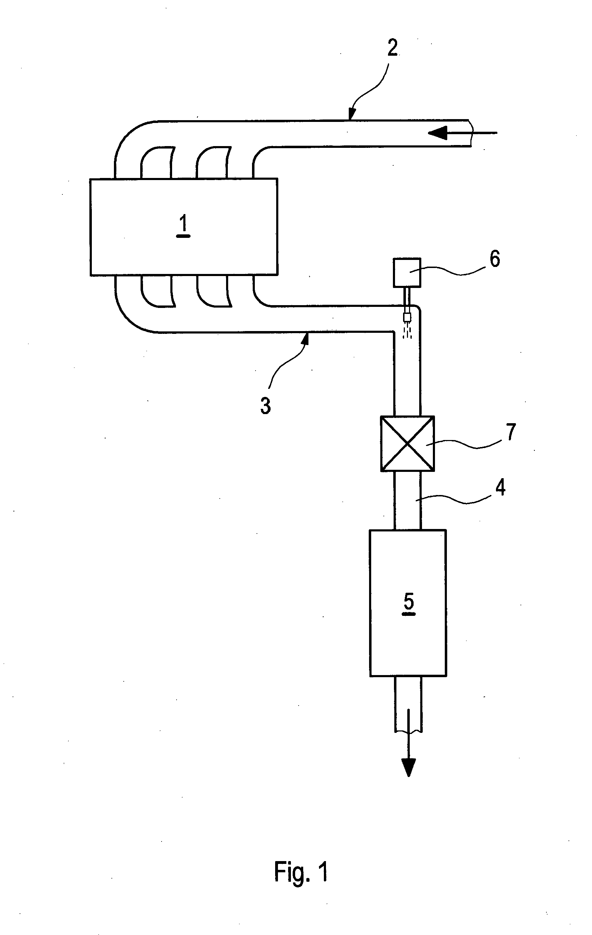

Entsprechend Fig. 1 weist eine Brennkraftmaschine 1, die beispielsweise in einem Kraftfahrzeug angeordnet sein kann, zur Versorgung mit Frischgas, vorzugsweise Luft, eine Frischgasanlage 2 und zum Abführen von Abgas eine Abgasanlage 3 auf. Eine derartige Abgasanlage 3 umfasst eine abgasführende Leitung 4, die im Betrieb der Brennkraftmaschine 1 das dort entstehende Abgas von der Brennkraftmaschine 1 abführt. Die Abgasanlage 3 kann zumindest eine Abgasbehandlungseinrichtung 5 aufweisen, die in die abgasführende Leitung 4 eingebunden ist. Bei dieser Abgasbehandlungseinrichtung 5 kann es sich zum Beispiel um einen Oxidationskatalysator, um einen NOX-Speicherkatalysator, um einen Hydrolysereaktor, um einen SCR-Katalysator oder um ein Partikelfilter handeln. Ebenso können einzelne oder mehrere der genannten Einrichtungen in einem gemeinsamen Gehäuse, insbesondere in Verbindung mit einem Schalldämpfer, untergebracht sein. Ferner weist die Abgasanlage 3 eine Einspritzeinrichtung 6 auf, die dazu ausgestaltet ist, ein flüssiges Edukt in die abgasführende Leitung 4 einzuspritzen. Dabei ist die Einspritzeinrichtung 6 an die abgasführende Leitung 4 stromauf der Abgasbehandlungseinrichtung 5 angeordnet. Beim flüssigen Edukt kann es sich vorzugsweise um Kraftstoff handeln, insbesondere um denselben Kraftstoff, mit dem auch die Brennkraftmaschine 1 betrieben wird. Alternativ kann es sich beim Edukt auch um Ammoniak oder um Harnstoff bzw. um eine wässrige Harnstofflösung handeln. Sofern eine Kraftstoffinjektion vorgesehen ist, handelt es sich bei der unmittelbar stromab zur Einspritzeinrichtung 6 benachbarten Abgasbehandlungseinrichtung 5 vorzugsweise um einen Oxidationskatalysator, an dem eine Umsetzung des Kraftstoffs in Wärme erfolgt, beispielsweise um den Oxidationskatalysator auf seine Betriebstemperatur zu bringen oder um ein stromab des Oxidationskatalysators angeordnetes Partikelfilter auf eine Regenerationstemperatur aufzuheizen. Sofern die Einspritzeinrichtung 6 zum Einspritzen von Ammoniak ausgestaltet ist, kann es sich bei der Abgasbehandlungseinrichtung 5 um einen SCR-Katalysator handeln. Sofern Harnstoff oder eine Harnstoff-Wasser-Lösung eingedüst wird, kann es sich bei der unmittelbar stromab folgenden Abgasbehandlungseinrichtung 5 vorzugsweise um einen Hydrolysereaktor oder Hydrolyse-Katalysator handeln, in dem der Harnstoff in Ammoniak umgesetzt wird, um einen nachfolgenden SCR-Katalysator zu beaufschlagen. Ebenso kann auf die Einspritzeinrichtung 6 direkt einer als SCR-Katalysator ausgestaltete Abgasbehandlungseinrichtung 5 folgen, in der zusätzlich die Hydrolysereaktion abläuft. Darüber hinaus sind noch beliebige andere Anwendungen für die Einspritzung eines flüssigen Edukts in die abgasführende Leitung 4 mit und ohne Wechselwirkung mit der Abgasbehandlungseinrichtung 5 denkbar.

Entsprechend Fig. 1 wird für die Eindüsung des Edukts eine axiale Ausrichtung des Eduktstrahls bevorzugt, was hier exemplarisch durch eine entsprechende Biegung oder Abwinkelung in der abgasführenden Leitung 4 realisiert ist.

Um das eingespritzte, flüssige Edukt möglichst rasch und möglichst vollständig im Abgas verdampfen zu können und um das verdampfte Edukt möglichst homogen mit dem Abgas zu vermischen, ist die Abgasanlage 3 mit einer Mischund/oder Verdampfungseinrichtung 7 ausgestattet, die in der abgasführenden Leitung 4 angeordnet ist, und zwar stromab der Einspritzeinrichtung 6 und zweckmäßig stromauf oder unmittelbar an oder in der zur Einspritzeinrichtung 6 benachbarten Abgasbehandlungseinrichtung 5.

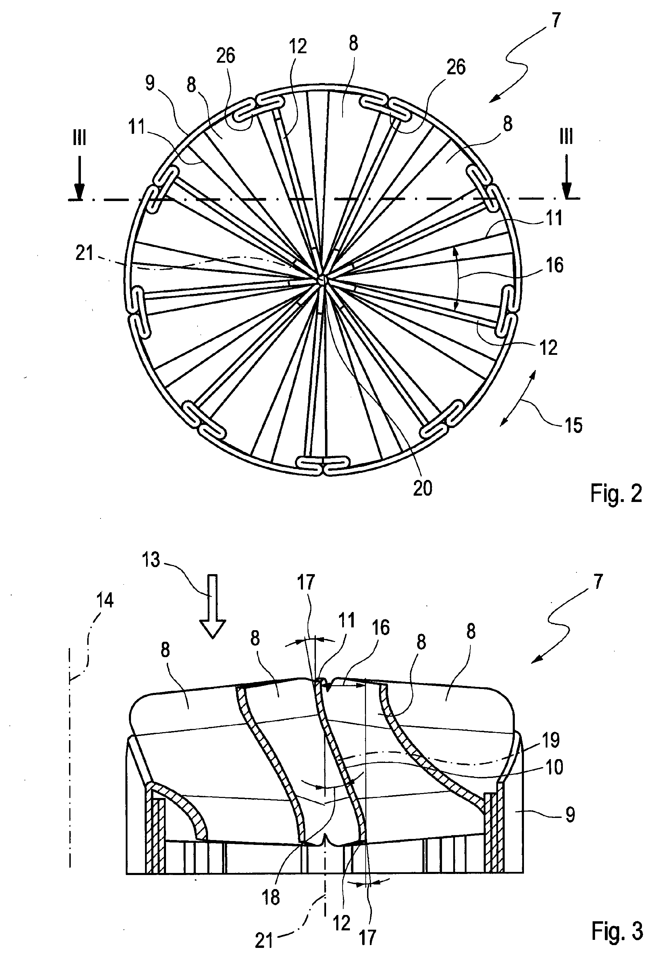

Bevorzugte Ausführungsformen der Misch- und/oder Verdampfungseinrichtung 7, die im Folgenden auch abgekürzt mit Einrichtung 7 bezeichnet wird, werden im Folgenden mit Bezug auf die Fig. 2-12 näher erläutert.

Entsprechend den Fig. 2-12 weist die jeweilige Einrichtung 7 mehrere Schaufeln 8 auf, die in Umfangsrichtung verteilt angeordnet sind und die von einer Außenwand 9 der Einrichtung 7 nach innen vorstehen. Entsprechend Fig. 3 besitzt jede Schaufel 8 im Axialschnitt bzw. in der Axialrichtung ein Profil 10 mit einer Anströmkante 11 und einer Abströmkante 12. Eine im Betrieb der Einrichtung 7 vorherrschende Strömungsrichtung ist z. B. in Fig. 3 durch einen Pfeil 13 angedeutet. Die Axialrichtung der Einrichtung 7 ist z. B. in Fig. 3 durch eine strichpunktierte Linie angedeutet und mit 14 bezeichnet. Die Umfangsrichtung der Einrichtung 7 ist z. B. in Fig. 2 durch einen gebogenen Doppelpfeil 15 angedeutet.

Die Schaufeln 8 sind zumindest in einem an die Außenwand 9 anschließenden Bereich so profiliert, dass zwischen der Anströmkante 11 und der Abströmkante 12 in der Umfangsrichtung 15 ein Versatz 16 vorliegt. Hierdurch ist die entsprechende Schaufel 8 zumindest in diesem an die Außenwand 9 angrenzenden Bereich gegenüber der Abgasströmung 13 angestellt.

Beachtenswert ist nun, dass das Profil 10 sowohl an der Anströmkante 11 als auch an der Abströmkante 12 gegenüber der Axialrichtung 14 einen Anstellwinkel 17 aufweist, der klein ist und in einem Bereich von einschließlich -10° bis einschließlich +10° liegt. Vorzugsweise liegt der Anstellwinkel 17, den die Anströmkante 11 und die Abströmkante 12 gegenüber der Axialrichtung 14 einnehmen, in einem Bereich von einschließlich -5° bis einschließlich +5°. Dabei müssen die Anstellwinkel 17 von Anströmkante 11 und Abströmkante 12 nicht gleich sein. Insbesondere können sie auch ein unterschiedliches Vorzeichen aufweisen. Bevorzugt ist jedoch eine Ausführungsform, bei welcher besagter Anströmwinkel 17 im Wesentlichen den Wert Null besitzt, so dass das Profil 10 an seiner Anströmkante 11 und an seiner Abströmkante 12 im Wesentlichen parallel zur Axialrichtung 14 orientiert ist.

Zur Realisierung eines vergleichsweise großen Versatzes 16 in Umfangsrichtung 15 besitzt das Profil 10 zwischen Anströmkante 11 und Abströmkante 12 einen Anstellwinkel 18 gegenüber der Axialrichtung 14, der größer ist als der an der Anströmkante 11 und an der Abströmkante 12 herrschende Anstellwinkel 17. Beispielsweise kann der Anstellwinkel 18 zwischen Anströmkante 11 und Abströmkante 12 auf einen Wert von mindestens 30° ansteigen. In den gezeigten Beispielen erreicht der zwischen Anströmkante 11 und Abströmkante 12 herrschende Anstellwinkel 18 des Profils 10 unmittelbar an der Außenwand 9 sogar 45° oder etwa 45°. Dabei steigt der zwischen Anströmkante 11 und Abströmkante 12 vorliegende Anstellwinkel 18 ausgehend von dem an der Anströmkante 11 herrschenden Wert bis zu seinem Maximum an und fällt anschließend bis zu dem an der Abströmkante 12 herrschenden Wert ab.

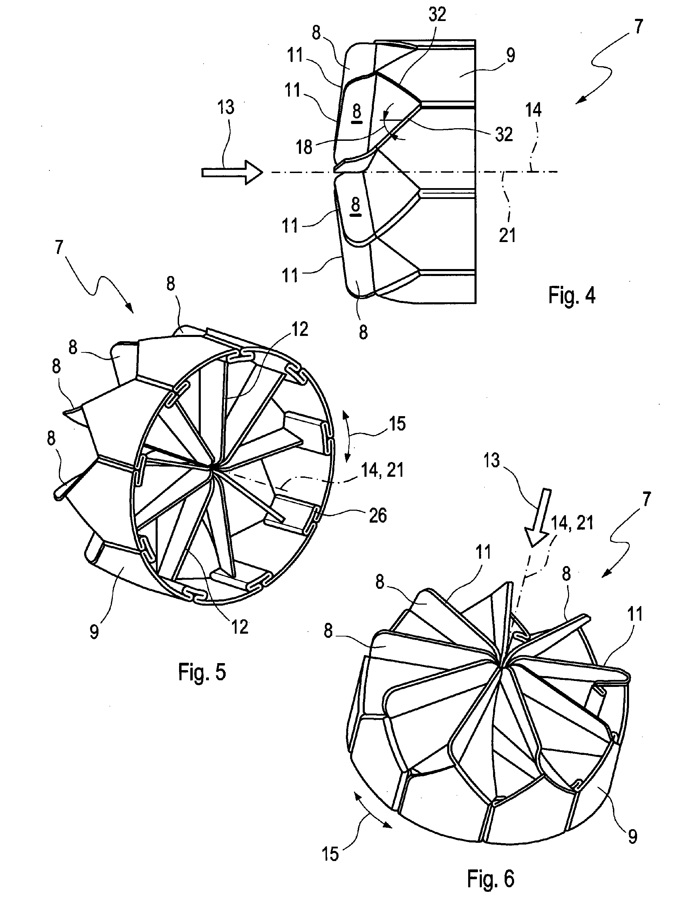

Zweckmäßig ist das Profil 10 so geformt, dass es von der Anströmkante 11 bis zur Abströmkante 12 ungestuft ist und insbesondere einen stetigen Verlauf aufweist. Besonders vorteilhaft ist dabei eine Ausführungsform, bei welcher das jeweilige Profil 10 zwischen seiner Anströmkante 11 und seiner Abströmkante 12 nur einen einzigen Wendepunkt aufweist, der in Fig. 3 mit 19 bezeichnet ist. Der Wendepunkt 19 liegt dabei auf einer gedachten Mittellinie des Profils 10, die sich mittig zwischen der Anströmseite und der Abströmseite des Profils 10 befindet. Des Weiteren ist der Wendepunkt 19 vorzugsweise mittig zwischen Anströmkante 11 und Abströmkante 12 angeordnet, so dass die Änderung des Anstellwinkels 18 entlang des Profils 10 insbesondere symmetrisch zunehmen und abnehmen kann. Dabei kann die Geometrie der Schaufeln 8 bzw. die Formgebung des Profils 10 auch einen geradlinigen Abschnitt 32 aufweisen, der sich zwischen Anströmkante 11 und Abströmkante 12, insbesondere mittig, befindet, und zwar gemäß Fig. 4 zumindest unmittelbar an der Außenwand 9.

Bei den hier gezeigten, bevorzugten Ausführungsformen erfolgt die Profilierung und Formgebung der Schaufeln 8 außerdem so, dass der in Umfangsrichtung zwischen Anströmkante 11 und Abströmkante 12 vorliegende Versatz 16 entlang der jeweiligen Schaufel 8 von außen nach innen abnimmt. Erreicht wird dies durch eine Verwindung der jeweiligen Schaufel 8 bezüglich ihrer radialen Erstreckung. Die Verwindung der Schaufeln 8 wird bei den hier gezeigten, besonderen Ausführungsformen so realisiert, dass der Anstellwinkel 17 des Profils 10 an der Anströmkante 11 und an der Abströmkante 12 entlang der jeweiligen Schaufel 8 von außen nach innen konstant ist. Der an der Anströmkante 11 und an der Abströmkante 12 auftretende Anstellwinkel 17 ist somit über die gesamte radiale Erstreckung der Schaufeln 8 gleich. Im Unterschied dazu variiert jedoch der zwischen Anströmkante 11 und Abströmkante 12 herrschende Anstellwinkel 18 entlang der radialen Erstreckung der Schaufeln 8. Dabei nimmt besagter zwischen Anströmkante 11 und Abströmkante 12 herrschende Anstellwinkel 18 entlang der jeweiligen Schaufel 8 von außen nach innen ab. Somit herrscht im Bereich der Außenwand 9 zwischen Anströmkante 11 und Abströmkante 12 der größte Anstellwinkel 18 des Profils 10, wodurch dort auch der größte Versatz 16 herrscht. Im Unterschied dazu tritt an einem radial innen liegenden Ende der jeweiligen Schaufel 8 zwischen Anströmkante 11 und Abströmkante 12 jeweils der kleinste Anstellwinkel 18 auf, was zum kleinsten Versatz 16 führt.

Besonders vorteilhaft ist dabei eine Ausführungsform, wie sie zum Beispiel in Fig. 2 erkennbar ist, bei welcher die jeweilige Schaufel 8 an ihrem zur Außenwand 9 distalen Ende, also an ihrem innen liegenden Ende eine gerade Endkante 20 besitzt. Die jeweilige Endkante 20 erstreckt sich dabei parallel zur Axialrichtung 14. Mit anderen Worten, an dieser innen liegenden Endkante 20 ist der Anstellwinkel 17 bzw. 18 von der Anströmkante 11 bis zur Abströmkante 12 durchgehend auf den Wert Null gesetzt, so dass an der Endkante 20 keine Anstellung vorliegt und auch kein Versatz 16 zwischen Anströmkante 11 und Abströmkante 12 gegeben ist. Durch diese Formgebung können die innen liegenden Endkanten 20 der Schaufeln 8 sehr nahe aneinander positioniert werden. Insbesondere ist es möglich, die innen liegenden Enden freistehend zu positionieren, so dass sich die Schaufeln 8 an ihren innen liegenden Enden nicht berühren.

Ebenso ist eine Ausführungsform möglich, bei der sich die Schaufeln 8 an ihren innen liegenden Enden berühren und insbesondere aneinander abstützen. Bevorzugt können sich die Schaufeln 8 an ihren innen liegenden Enden unter Vorspannung aneinander abstützen, wodurch sich eine gezielte Aussteifung der Einrichtung 7 im montierten Zustand realisieren lässt.

Die Formgebung der Schaufeln 8 erfolgt zweckmäßig außerdem so, dass sich die Anströmkanten 11 entlang der jeweiligen Schaufel 8 von außen nach innen gerade, also entlang von Geraden erstrecken. Zusätzlich oder alternativ können sich auch die Abströmkanten 12 entlang der jeweiligen Schaufel 8 von außen nach innen gerade, also entlang von Geraden erstrecken. Im Beispiel sind diese geraden Anströmkanten 11 und die geraden Abströmkanten 12 exakt radial orientiert, so dass sie sich von einer Längsmittelachse 21 der Einrichtung 7 sternförmig radial erstrecken.

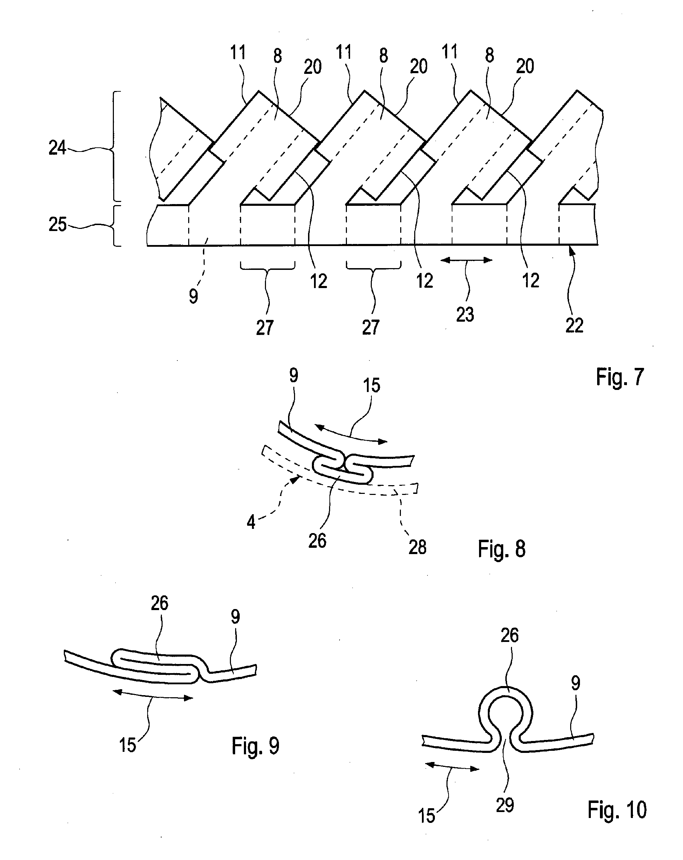

Die Fig. 2-6 zeigen eine Ausführungsform der Einrichtung 7, bei der die Einrichtung 7 aus einem einzigen Blechteil 22 durch Umformung hergestellt ist, das in Fig. 7 wiedergegeben ist. Entsprechend Fig. 7 erstreckt sich das Blechteil 22 in dem hier wiedergegebenen Herstellungszustand, in dem das Blechteil 22 abgewickelt oder abgerollt ist, in der Zeichnungsebene sowie in einer Längsrichtung 23. Bezüglich dieser Längsrichtung 23 ist das Blechteil 22 streifenförmig ausgestaltet, so dass es im Folgenden auch als Blechstreifen 22 bezeichnet werden kann. Bei dem in Fig. 7 gezeigten Fertigungszustand sind an einer (oberen) Längsseite 24 des Blechstreifens 22 bereits die Schaufeln 8 freigeschnitten oder ausgestanzt. Erkennbar sind die Anströmkanten 11, die Abströmkanten 12 und die geraden inneren Endkanten 20. Zur vereinfachten Darstellung sind in Fig. 7 die, z. B. in den Fig. 2-6 erkennbaren, abgerundeten Übergänge von den im montierten Zustand radialen Kanten, z. B. 11 und 12, zu den im montierten Zustand axialen Kanten, z. B. 20, nicht dargestellt.

Die andere (untere) Längsseite 25 verbindet die einzelnen Schaufeln 8 miteinander und bildet im fertigen Zustand der Einrichtung 7 die Außenwand 9. Hierzu wird der Blechstreifen 22 in seiner Ebene quer zu seiner Längsrichtung 23 aufgewickelt bzw. aufgerollt, derart, dass sich anschließend die Längsrichtung 23 des Blechstreifens 22 in der Umfangsrichtung 15 der Außenwand 9 erstreckt.

Um nun eine möglichst große Anzahl an Schaufeln 8 entlang der Außenwand 9 unterbringen zu können, kann es zweckmäßig sein, die Umformung des Blechstreifens 22 bzw. seiner Längsseite 25 zur Außenwand 9 so durchzuführen, dass die der Außenwand 9 zugeordnete Längsseite 25 in dem in Fig. 7 gezeigten, nicht umgeformten Zustand länger ist als der Umfang der daraus hergestellten Außenwand 9. Hierzu kann die Umformung des Blechstreifens 22 so durchgeführt werden, dass die Außenwand 9 mit mehreren, in den Fig. 2-6 erkennbaren Einschlingungen 26 ausgestattet wird, die in der Umfangsrichtung 15 verteilt angeordnet sind. Diese Einschlingungen 26 werden dabei aus den in Fig. 7 durch geschweifte Klammern gekennzeichneten Bereichen 27 der Längsseite 25 gebildet, welche der Außenwand 9 zugeordnet ist. Diese Bereiche oder Abschnitte 27 erstrecken sich dabei in der Längsrichtung 23 dieser der Außenwand 9 zugeordneten Längsseite 25 zwischen aufeinanderfolgenden Schaufeln 8. Hierdurch lässt sich besonders einfach eine Ausführungsform für die Einrichtung 7 realisieren, die aus einem einzigen Blechformteil (Blechstreifen 22) besteht und bei der die axiale Länge einer Schaufel 8 multipliziert mit der Anzahl der Schaufeln 8 größer ist als die Umfangslänge der Außenwand 9.

Bei der in den Fig. 2-6 gezeigten Ausführungsform stehen die Einschlingungen 26 von der Außenwand 9 nach innen ab. Dabei sind sie flach bzw. flächig anliegend ausgestaltet. Bei den in den Fig. 2-6 gezeigten Ausführungsformen sind die Einschlingungen 26 bezüglich der Umfangsrichtung 15 symmetrisch geformt.

Fig. 8 zeigt eine Einschlingung 26 einer anderen Ausführungsform, bei welcher die Einschlingungen 26 von der Außenwand 9 nach außen abstehen. Dabei können die Einschlingungen 26 im Einbauzustand der Einrichtung 7 die Außenwand 9 an einer in Fig. 8 durch unterbrochene Linien angedeuteten Innenwand 28 der abgasführenden Leitung 4 der Abgasanlage 3 abstützen. Sie können dabei so geformt sein, dass sie in der Radialrichtung einerseits eine federelastische Abstützung realisieren und/oder andererseits eine vorgespannte Positionierung und somit Fixierung auch axial der Einrichtung 7 in der Leitung 4 ermöglichen.

Besonders vorteilhaft ist eine Ausführungsform, bei welcher die Einschlingungen 26 möglichst weitgehend im Strömungsschatten der jeweiligen Schaufeln 8 angeordnet sind. Fig. 9 zeigt eine Ausführungsform, bei welcher die Einschlingungen 26 bezüglich der Umfangsrichtung 15 asymmetrisch geformt sind und somit insbesondere eine vollständige Unterbringung im Strömungsschatten einer der Schaufeln 8 ermöglichen. Auch bei der in Fig. 9 gezeigten Ausführungsform sind die Einschlingungen 26 flach anliegend und außerdem nach innen abstehend ausgestaltet.

Fig. 10 zeigt eine weitere Variante für die Realisierung der Einschlingungen 26. Auch hier steht die gezeigte Einschlingung 26 nach innen von der Außenwand 9 ab. Bemerkenswert bei dieser Variante ist, dass die Einschlingungen 26 so geformt sind, dass die Außenwand 9 im Bereich der jeweiligen Einschlingung 26 eine Lücke 29 besitzt, wodurch auch in der Umfangsrichtung 15 eine Federwirkung mit Hilfe der jeweiligen Einschlingung 26 realisierbar ist, beispielsweise um Fertigungstoleranzen und/oder um thermische Dehnungseffekte in der Umfangsrichtung 15 ausgleichen zu können.

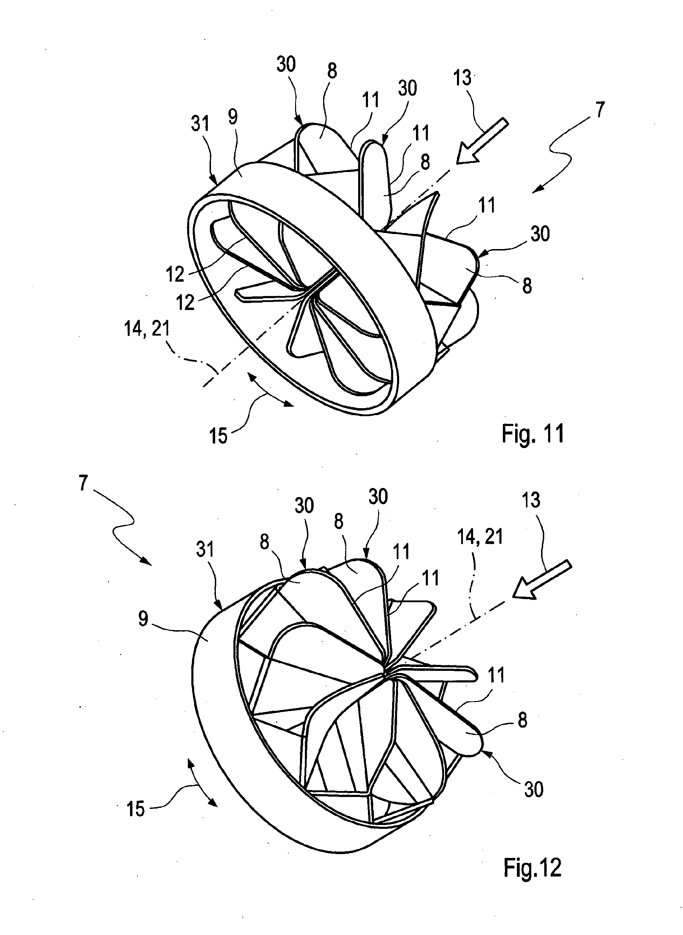

Alternativ zu der mit Bezug auf die Fig. 2-10 erläuterten einteiligen Ausführungsform zeigen die Fig. 11 und 12 eine andere Ausführungsform, bei welcher die Einrichtung 7 nicht aus einem einzigen Blechteil 22 integral geformt ist, sondern bei der die Einrichtung 7 gebaut ist. Hierzu weist die Einrichtung 7 mehrere Schaufelteile 30 auf, die jeweils zumindest eine Schaufel 8 aufweisen. Ferner ist ein Ringkörper 31 vorgesehen, der die Außenwand 9 bildet. Die Schaufelteile 30 sind an den Ringkörper 31 angebaut, um so die Einrichtung 7 aufzubauen. Der Ringkörper 31 kann in der Umfangsrichtung 15 zumindest an einer Stelle unterbrochen bzw. geschlitzt sein, z. B. um Fertigungstoleranzen und/oder thermische Drehungseffekte in der Umfangsrichtung 15 anzugleichen. Bei einer speziellen Ausführungsform kann das jeweilige Schaufelteil 30 auch zwei oder mehr Schaufeln 8 umfassen bzw. bilden. Die in den Fig. 11 und 12 gezeigte gebaute Variante der Einrichtung 7 kommt ohne Einschlingungen 26 aus, die von der Außenwand 9 nach innen oder nach außen abstehen.

## Patentansprüche

1. Axial von Abgas durchströmbare Misch- und/oder Verdampfungseinrichtung zur Anordnung in einer Abgas führenden Leitung (4) einer Abgasanlage (3) einer Brennkraftmaschine (1), insbesondere eines Kraftfahrzeugs,
- mit mehreren in Umfangsrichtung (15) verteilt angeordneten Schaufeln (8), die von einer Außenwand (9) nach innen vorstehen,
- wobei jede Schaufel (8) zumindest in einem an die Außenwand (9) anschließenden Bereich in der Axialrichtung (14) ein Profil (10) aufweist, bei dem eine Abströmkante (12) in Umfangsrichtung (15) gegenüber einer Anströmkante (11) einen Versatz (16) aufweist,
- wobei das Profil (10) an der Anströmkante (11) und an der Abströmkante (12) jeweils einen Anstellwinkel (17) zur Axialrichtung (14) aufweist, der in einem Bereich von einschließlich -10° bis einschließlich +10° liegt,
**dadurch gekennzeichnet,**
**dass** die Misch- und/oder Verdampfungseinrichtung aus einem einzigen Blechteil durch Umformung hergestellt ist und die Außenwand (9) mehrere in Umfangsrichtung (15) verteilt angeordnete Einschlingungen (26) aufweist, derart, dass ein Blechstreifen (22), aus dem durch Umformung die Außenwand (9) hergestellt ist, im nicht umgeformten Zustand länger ist als ein Umfang der daraus hergestellten Außenwand (9).

2. Misch- und Verdampfungseinrichtung nach Anspruch 1,
**dadurch gekennzeichnet,**
**dass** das Profil (10) zwischen Anströmkante (11) und Abströmkante (12) einen Anstellwinkel (18) gegenüber der Axialrichtung (18) aufweist, der größer ist als der an der Anströmkante (11) und an der Abströmkante (12) herrschende Anstellwinkel (17).

3. Misch- und/oder Verdampfungseinrichtung nach Anspruch 1 oder 2,
**dadurch gekennzeichnet,**
- **dass** der Anstellwinkel (17) des Profiles (10) an der Anströmkante (11) und an der Abströmkante (12) gegenüber der Axialrichtung (14) betragsmäßig maximal 5° beträgt, und/oder
- **dass** das Profil (10) an der Anströmkante (11) und an der Abströmkante (12) im Wesentlichen parallel zur Axialrichtung (14) orientiert ist.

4. Misch- und/oder Verdampfungseinrichtung nach einem der Ansprüche 1 bis 3, **dadurch gekennzeichnet,**
- **dass** das Profil (10) zwischen der Anströmkante (11) und der Abströmkante (12) nur einen Wendepunkt (19) aufweist,
- wobei insbesondere vorgesehen sein kann, dass der Wendepunkt (19) etwa mittig zwischen der Anströmkante (11) und der Abströmkante (12) angeordnet ist.

5. Misch- und/oder Verdampfungseinrichtung nach einem der Ansprüche 1 bis 4,
**dadurch gekennzeichnet,**
**dass** das Profil (10) von der Anströmkante (11) bis zur Abströmkante (12) ungestuft ist.

6. Misch- und/oder Verdampfungseinrichtung nach einem der Ansprüche 1 bis 5,
**dadurch gekennzeichnet,**
**dass** der Versatz (16) entlang der jeweiligen Schaufel (8) von außen nach innen abnimmt.

7. Milch- und/oder Verdampfungseinrichtung nach einem der Ansprüche 1 bis 6,
**dadurch gekennzeichnet,**
**dass** der Anstellwinkel (17) des Profils (10) an der Anströmkante (11) und an der Abströmkante (12) entlang der Schaufel (8) von außen nach innen konstant ist, während ein zwischen Anströmkante (11) und der Abströmkante (12) herrschender Anstellwinkel (18) des Profils (10) entlang der Schaufel (8) von außen nach innen abnimmt.

8. Misch- und/oder Verdampfungseinrichtung nach einem der Ansprüche 1 bis 7,
**dadurch gekennzeichnet,**
- **dass** sich die Anströmkante (11) entlang der Schaufel (8) von außen nach innen gerade erstreckt, und/oder
- **dass** sich die Abströmkante (12) entlang der Schaufel (8) von außen nach innen gerade erstreckt.

9. Misch- und/oder Verdampfungseinrichtung nach einem der Ansprüche 1 bis 8,
**dadurch gekennzeichnet,**
**dass** die jeweilige Schaufel (8) ein zur Außenwand (9) distales, innen liegendes Ende aufweist, das eine gerade Endkante (20) besitzt, die sich parallel zur Axialrichtung (14) erstreckt.

10. Misch- und/oder Verdampfungseinrichtung nach einem der Ansprüche 1 bis 9,
**dadurch gekennzeichnet,**
**dass** die Schaufeln (8) jeweils ein zur Außenwand (9) distales, innen liegendes und freistehendes Ende aufweisen, so dass sich die Schaufeln (8) an ihren innen liegenden Enden nicht berühren.

11. Misch- und/oder Verdampfungseinrichtung nach einem der Ansprüche 1 bis 10,
**dadurch gekennzeichnet,**
**dass** die axiale Länge einer Schaufel (8) multipliziert mit der Anzahl der Schaufeln (8) größer ist als die Umfangslänge der Außenwand (9).

12. Misch- und/oder Verdampfungseinrichtung nach einem der Ansprüche 1 bis 11,
**dadurch gekennzeichnet,**
- **dass** die Misch- und/oder Verdampfungseinrichtung (7) aus mehreren Schaufelteilen (30), die jeweils wenigstens eine Schaufel (8) aufweisen, und einem die Außenwand (9) bildenden Ringkörper (31) zusammengebaut, oder
- **dass** die Misch- und/oder Verdampfungseinrichtung (7) aus einem einzigen Blechteil (22) durch Umformung hergestellt ist, wobei insbesondere vorgesehen sei kann, dass das Blechteil ein Blechstreifen (22) ist, an dem an der einen Längsseite (24) die Schaufeln (8) freigeschnitten oder ausgestanzt sind und dessen andere Längsseite (25) die Außenwand (9) bildet, wobei insbesondere vorgesehen sein kann, dass die der Außenwand (9) zugeordnete Längsseite (25) des Blechstreifens (22) im nicht umgeformten Zustand länger ist als der Umfang der Außenwand (9).

13. Misch- und/oder Verdampfungseinrichtung nach einem der Ansprüche 1 bis 12,
**dadurch gekennzeichnet,**
**dass** die Einschlingungen (26) von der Außenwand (9) nach außen abstehen und im Einbauzustand der Misch- und/oder Verdampfungseinrichtung (7) die Außenwand (9) an einer Innenwand (28) der abgasführenden Leitung (4) der Abgasanlage (3) abstützen, oder dass die Einschlingungen (26) von der Außenwand (9) nach innen abstehen.

14. Misch- und/oder Verdampfungseinrichtung nach einem der Ansprüche 1 bis 13,
**dadurch gekennzeichnet,**
- **dass** die Einschlingungen (26) jeweils im Strömungsschatten einer der Schaufeln (8) angeordnet sind, und/oder
- **dass** die Einschlingungen (26) flach oder flächig anliegend ausgestaltet sind.

15. Abgasanlage für eine Brennkraftmaschine (1), insbesondere eines Kraftfahrzeugs, mit mindestens einer abgasführenden Leitung (4), in der zumindest eine Misch- und/oder Verdampfungseinrichtung (7) nach einem der Ansprüche 1 bis 14 angeordnet ist.

## Claims

1. A mixing and/or evaporation device through which exhaust gas can axially flow for arrangement in an exhaust gas-conducting line (4) of an exhaust system (3) of an internal combustion engine (1), in particular of a motor vehicle,
- with multiple blades (8) which are arranged distributed in circumferential direction (15), which project from an outer wall (9) towards the inside,
- wherein each blade (8) comprises at least one profile (10) in the axial direction (14) in a region following the outer wall (9), in which an outflow edge (12) has an offset (16) in circumferential direction (15) relative to an inflow edge (11),
- wherein the profile (10) on the inflow edge (11) and on the outflow edge (12) has a setting angle (17) each with respect to the axial direction (14), which is in a range from including -10° to including +10°,
**characterized in that** the mixing and/or evaporation device is produced from a single sheet metal part by forming and the outer wall (9) comprises multiple inward loopings (26) arranged distributed in circumferential direction (15) in such a manner that a sheet metal strip (22) from which the outer wall (9) is produced by forming, is longer in the non-formed state than a circumference of the outer wall (9) produced from it.

2. The mixing and evaporation device according to Claim 1, **characterized in that** the profile (10) between inflow edge (11) and outflow edge (12) has a setting angle (18) with respect to the axial direction (18) that is larger than the setting angle (17) that is present on the inflow edge (11) and on the outflow edge (12).

3. The mixing and evaporation device according to Claim 1 or 2, **characterized**
- **in that** the setting angle (17) of the profile (10) on the inflow edge (11) and on the outflow edge (12) with respect to the axial direction (14) in terms of amount is a maximum of 5°, and/or
- **in that** the profile (10) on the inflow edge (11) and on the outflow edge (12) is substantially orientated parallel to the axial direction (14).

4. The mixing and evaporation device according to any one of the Claims 1 to 3, **characterized**
- **in that** the profile (10) between the inflow edge (11) and the outflow edge (12) has only one point of inflection (19),
- wherein it can be provided in particular that the point of inflection (19) is arranged approximately in the middle between the inflow edge (11) and the outflow edge (12).

5. The mixing and evaporation device according to any one of the Claims 1 to 4, **characterized in that** the profile (10) from the inflow edge (11) as far as to the outflow edge (12) is non-stepped.

6. The mixing and evaporation device according to any one of the Claims 1 to 5, **characterized in that** the offset (16) along the respective blade (8) decreases from the outside to the inside.

7. The mixing and evaporation device according to any one of the Claims 1 to 6, **characterized in that** the setting angle (17) of the profile (10) on the inflow edge (11) and on the outflow edge (12) along the blade (8) is constant from the outside to the inside, while a setting angle (18) of the profile (10) between inflow edge (11) and the outflow edge (12) along the blade (8) decreases from the outside to the inside.

8. The mixing and evaporation device according to any one of the Claims 1 to 7, **characterized**
- **in that** the inflow edge (11) along the blade (8) extends linearly from the outside to the inside, and/or
- **in that** the outflow edge (12) along the blade (8) extends linearly from the outside to the inside.

9. The mixing and evaporation device according to any one of the Claims 1 to 8, **characterized in that** the respective blade (8) has an end located inside that is distal with respect to the outside wall (9), which has a straight end edge (20) which extends parallel to the axial direction (14).

10. The mixing and/or evaporation device according to any one of the Claims 1 to 9, **characterized in that** the blades (8) each have an end that is located inside and free-standing that is distal with respect to the outer wall (9), so that the blades (8) do not touch one another on their ends located inside.

11. The mixing and/or evaporation device according to any one of the Claims 1 to 10, **characterized in that** the axial length of a blade (8) multiplied by the number of blades (8) is greater than the circumferential length of the outer wall (9).

12. The mixing and/or evaporation device according to any one of the Claims 1 to 11, **characterized**
- **in that** the mixing and/or evaporation device (7) is assembled from multiple blade parts (30) which each comprise at least one blade (8), and an annular body (31) forming the outer wall (9), or
- **in that** the mixing and/or evaporation device (7) is produced from a single sheet metal part (22) by forming, wherein it can be provided in particular that the sheet metal part is a sheet metal strip (22) from which the blades (8) are cut free or punched out on the one long side (24) and the other long side (25) of which forms the outer wall (9), wherein it can be provided in particular that the long side (25) of the sheet metal strip (22) assigned to the outer wall (9) in the non-formed state is longer than the circumference of the outer wall (9).

13. The mixing and/or evaporation device according to any one of the Claims 1 to 12, **characterized in that** the inward loopings (26) project from the outer wall (9) towards the outside and in the installed state of the mixing and/or evaporation device (7) support the outer wall (9) on an inner wall (28) of the exhaust gas-conducting line (4) of the exhaust system (3), or **in that** the inward loopings (26) project from the outer wall (9) towards the inside.

14. The mixing and/or evaporation device according to any one of the Claims 1 to 13, **characterized**
- **in that** the inward loopings (26) are each arranged in the region of turbulence of one of the blades (8), and/or
- **in that** the inward loopings (26) are configured flat or areally contacting.

15. An exhaust system for an internal combustion engine (1), in particular of a motor vehicle, with at least one exhaust gas-conducting line (4), in which at least one mixing and/or evaporation device (7) according to any one of the Claims 1 to 14 is arranged.

## Revendications

1. Dispositif de mélange et/ou d'évaporation pouvant être traversé axialement par un gaz d'échappement, à disposer dans une conduite (4) guidant du gaz d'échappement d'une installation de gaz d'échappement (3) à d'un moteur à combustion interne (1), notamment d'un véhicule automobile,
- comportant plusieurs pales (8) réparties dans la direction circonférentielle (15), qui dépassent vers l'intérieur depuis une paroi extérieure (9),
- dans lequel chaque pale (8) présente un profilé (10) au moins dans une zone contigüe à la paroi extérieure (9) dans la direction axiale (14), sur lequel une arête d'évacuation (12) dans la direction circonférentielle (15) présente un décalage (16) par rapport à une arête d'amenée (11),
- dans lequel le profilé (10) sur l'arête d'amenée (11) et sur l'arête d'évacuation (12) présente respectivement un angle d'attaque (17) par rapport à la direction axiale (14), qui se situé dans une plage de -10° inclus à +10° inclus,
**caractérisé en ce que** le dispositif de mélange et/ou d'évaporation est fabriqué par façonnage à partir d'une pièce de tôle unique et la paroi extérieure (9) présente plusieurs boucles (26) réparties dans la direction circonférentielle (15), de telle sorte qu'une bande de tôle (22), à partir de laquelle la paroi extérieure (9) est fabriquée par façonnage en l'état non façonné est plus longue qu'une circonférence de la paroi extérieure (9) fabriquée à partir de celle-ci.

2. Dispositif de mélange et d'évaporation selon la revendication 1, **caractérisé en ce que** le profilé (10) entre l'arête d'amenée (11) et l'arête d'évacuation (12) présente un angle d'attaque (18) par rapport à la direction axiale (18), qui est plus grand que l'angle d'attaque (17) présent sur l'arête d'amenée (11) et sur l'arête d'évacuation (12).

3. Dispositif de mélange et/ou d'évaporation selon la revendication 1 ou 2, **caractérisé en ce que**
- l'angle d'attaque (17) du profilé (10) sur l'arête d'amenée (11) et sur l'arête d'évacuation (12) s'élève au maximum à 5° en terme de montant par rapport à la direction axiale (14) et/ou
- le profilé (10) sur l'arête d'amenée (11) et sur l'arête d'évacuation (12) ets orienté essentiellement parallèlement à la direction axiale (14).

4. Dispositif de mélange et/ou d'évaporation selon une des revendications 1 à 3, **caractérisé en ce que**
- le profilé (10) présente entre l'arête d'amenée (11) et l'arête d'évacuation (12) seulement un point tournant (19),
- dans lequel il peut notamment être prévu que le point tournant (19) soit disposé approximativement au centre entre l'arête d'amenée (11) et l'arête d'évacuation (12).

5. Dispositif de mélange et/ou d'évaporation selon une des revendications 1 à 4, **caractérisé en ce que** le profilé (10) est dépourvu de dénivelés de l'arête d'amenée (11) jusqu'à l'arête d'évacuation (12).

6. Dispositif de mélange et/ou d'évaporation selon une des revendications 1 à 5, caractérisé en ce le décalage (16) diminue de l'extérieur vers l'intérieur le long de la pale respective (8).

7. Dispositif de mélange et/ou d'évaporation selon une des revendications 1 à 6, **caractérisé en ce que** l'angle d'attaque (17) du profilé (10) sur l'arête d'amenée (11) et sur l'arête d'évacuation (12) est constant de l'extérieur vers l'intérieur le long de la pale (8), alors qu'un angle d'attaque (18) présente entre l'arête d'amenée (11) et l'arête d'évacuation (12) du profilé (10) diminue le long de la pale (8) de l'extérieur vers l'intérieur.

8. Dispositif de mélange et/ou d'évaporation selon une des revendications 1 à 7, **caractérisé en ce que**
- l'arête d'amenée (11) s'étend le long de la pale (8) en ligne droite de l'extérieur vers l'intérieur et/ou
- l'arête d'évacuation (12) s'étend le long de la pale (8) en ligne droite de l'extérieur vers l'intérieur.

9. Dispositif de mélange et/ou d'évaporation selon une des revendications 1 à 8, **caractérisé en ce que** la pale respective (8) présente une extrémité située à l'intérieur, distale par rapport à la paroi extérieure (9), qui possède une arête d'extrémité droite (20), qui s'étend parallèlement à la direction axiale (14).

10. Dispositif de mélange et/ou d'évaporation selon une des revendications 1 à 9, **caractérisé en ce que** les pales (8) présentent respectivement une extrémité située à l'intérieur, distale par rapport à la paroi extérieure (9) et à découvert, de telle sorte que les pales (8) ne se touchent pas sur leurs extrémités situées à l'intérieur.

11. Dispositif de mélange et/ou d'évaporation selon une des revendications 1 à 10, **caractérisé en ce que** la longueur axiale d'une pale (8) multipliée par le nombre de pales (8) est plus grande que la longueur circonférentielle de la paroi extérieure (9).

12. Dispositif de mélange et/ou d'évaporation selon une des revendications 1 à 11, **caractérisé en ce que**
- le dispositif de mélange et/ou d'évaporation (7) est composé de plusieurs pales (30), qui présentent respectivement au moins une pale (8) et d'un corps annulaire (31) formant la paroi extérieure (9),
- le dispositif de mélange et/ou d'évaporation (7) est fabriqué par façonnage à partir d'une pièce de tôle unique (22), dans lequel il peut notamment être prévu que la pièce de tôle soit une bande de tôle (22), sur laquelle sur un des côtés longitudinaux (24) les pales (8) sont découpées à l'emporte-pièce ou par matriçage et dont l'autre côté longitudinal (25) forme la paroi extérieure (9), dans lequel il peut notamment être prévu que le côté longitudinal (25) coordonné à la paroi extérieure (9) de la bande de tôle (22) en l'état non façonné est plus long que la circonférence de la paroi extérieure (9).

13. Dispositif de mélange et/ou d'évaporation selon une des revendications 1 à 12, **caractérisé en ce que** les boucles (26) dépassent vers l'extérieur depuis la paroi extérieure (9) et en l'état monté du dispositif de mélange et/ou d'évaporation (7) appuient la paroi extérieure (9) sur une paroi intérieure (28) de la conduite guidant le gaz d'échappement (4) de l'installation de gaz d'échappement (3) ou que les boucles (26) dépassent vers l'intérieur depuis la paroi extérieure (9).

14. Dispositif de mélange et/ou d'évaporation selon une des revendications 1 à 3, **caractérisé en ce que**
- les boucles (26) sont disposées respectivement dans les trajets d'écoulement d'une des pales (8) et/ou
- les boucles (26) sont conçues de manière plate ou de manière à venir reposer à plat.

15. Installation de gaz d'échappement pour un moteur à combustion interne (1), notamment d'un véhicule automobile, comportant au moins une conduite (4) guidant le gaz d'échappement, dans laquelle au moins un dispositif de mélange et/ou d'évaporation (7) selon une des revendications 1 à 14 est disposé.
